# EUROPÄISCHE PATENTSCHRIFT

(11) **EP 1 059 159 B1**
(45) Veröffentlichungstag und Bekanntmachung des Hinweises auf die Patenterteilung: **06.05.2004**
(21) Anmeldenummer: 00112417.1
(22) Anmeldetag: 09.06.2000
(51) Int. Cl.: B32B 5/02, G10K 11/162

(54) **Verbundmaterial**
Laminate
Laminé

(30) Priorität: 10.06.1999 DE 19926379
(43) Veröffentlichungstag der Anmeldung: 13.12.2000
(73) Patentinhaber: DEUTSCHE INSTITUTE FÜR TEXTIL- UND FASERFORSCHUNG STUTTGART Stiftung des öffentlichen Rechts, 73770 Denkendorf (DE)
(72) Erfinder: Ehrler, Peter Dr.-Ing., 72649 Wolfschlungen (DE); Elpasidis, Christos Dipl.-Ing., 73249 Wernau a.N. (DE); Planck, Heinrich Prof. Dr. Ing., 76222 Nürtingen (DE); Stegmaier, Thomas Dr., 73277 Owen (DE)
(74) Vertreter: Patentanwälte Ruff, Wilhelm, Beier, Dauster & Partner

(56) Entgegenhaltungen:
- EP-A- 0 692 563
- DE-A- 2 201 637
- DE-A- 2 722 076
- US-A- 5 151 311
- US-A- 5 908 673

## Beschreibung

Die Erfindung bezieht sich auf ein flächiges, steifes Verbundmaterial mit mindestens einer Mittelschicht und zwei, die Mittelschicht bedeckenden Außenschichten, wobei die Mittelschicht und die Außenschichten im wesentlichen vollflächig und fest miteinander verbunden sind, die mindestens eine Mittelschicht eine Textilstruktur aufweist, komprimierbar ist und schwingungs- und schalldämpfend wirkt.

Verbundmaterial oder Verbundwerkstoffe werden in den verschiedensten Bereichen eingesetzt. Sie bestehen aus verschiedenartigen, untereinander fest verbundenen Materialien, wodurch wesentliche Eigenschaften der Einzelkomponenten vorteilhaft miteinander kombiniert sind. Die bekanntesten Verbundmaterialien sind, z.B. Verbundfolien, Verbundglas oder Verbundplatten. Diese werden unter anderem als Leichtbaustoffe im Fahrzeug- und Gerätebau der Möbelindustrie und im Verpackungswesen verwendet. Im Fahrzeugbau verwendete Verbundwerkstoffe dienen vorwiegend zur Gewichtsersparnis und zur Erhöhung der Formsteifigkeit der Karosserie oder sonstiger Teile. Verbundwerkstoffe werden dabei häufig durch eine Sandwichbauweise gebildet, d.h. zwischen zwei Deckschichten aus Metall, Holz oder ähnlichem ist ein wabenartiger Stützkern geklebt oder gelötet. Durch den wabenartig ausgebildeten Stützkern ist eine plastische Verformung des Verbundwerkstoffes nur unter Aufbringung sehr großer Kräfte, und unter der Gefahr der Zerstörung des Stützkerns, möglich.

Die US-Patentschrift US 5 908 673 beschreibt ein textiles, dämpfendes Material, das bspw. als Tee-off Golfmatte verwendet werden kann. Die Matte besitzt Außenschichten aus nicht-metallischem Material, bspw. eine Stabilisierungsschicht aus Kunststoff, sowie eine Mittelschicht aus textilem Material. Die textile Mittelschicht hat eine Oberschicht und eine Unterschicht jeweils aus Multifilament-Garn (multi-thread yarn) und dazwischen Stoßfäden (pile threads), die einerseits mit der Oberschicht und andererseits mit der Unterschicht verbunden sind. Alternativ kann das offenbarte Laminat auch als dämpfende Matte für Kraftfahrzeuge benutzt werden.

Aus der US-Patentschrift US 5 151 311 ist ein schalldämpfendes Verbundmaterial bekannt, das zwei Außenschichten wahlweise aus einem Drahtgewebe und einer Aluminiumgrundplatte oder aus einer korrosionsbeständigen, gewebten Lochbahn und einer Aluminiumgrundplatte besitzt. Zwischen den Außenschichten befindet sich mindestens eine Mittelschicht, von denen eine eine wabenartige Struktur aufweist. Die Mittelschichten untereinander bzw. die Außenschichten und die mindestens eine Mittelschicht sind durch ein Bindemittel miteinander verklebt. Das Verbundmaterial wird als dämpfender Kaschierungsstoff für Flugzeuge verwendet.

Aus der Offenlegungsschrift DE 22 01 637 ist eine Panzerplatte mit erhöhter Durchschußfestigkeit bekannt. Die Panzerplatte besitzt ein Vorderblech und ein Hinterblech und dazwischen einen Verbundkörper aus Stahlfaservlies und Schaumstoff. Die Bleche und der Verbundkörper sind mittels eines Polyurethan-Haftklebers miteinander verklebt.

Aus der Offenlegungsschrift DE 27 220 76 ist ein Verfahren zum Kaschieren von Trägern, insbesondere Formteilen bekannt. Durch das Verfahren hergestellten Verbundkörper besitzen als Außenschichten Träger, insbesondere Auflagebahnen oder Deckfurniere und dazwischen als Mittelschicht ein mechanisch belastbares, elastisches Gebilde. Das Gebilde kann ein Gewebe, Vlies oder Gewirk sein. Die Außenschichten und die Mittelschicht werden durch ein Bindemittel, bspw. einen Heißschmelzkleber miteinander verklebt.

Aus der Veröffentlichungsschrift WO 98/01295 ist eine Sandwichkonstruktion für den Einsatz in Fahrzeugen usw. bekannt. Es sind zwei steife, metallische Platten als Außenschichten vorgesehen und dazwischen ein Flockmaterial als Mittelschicht. Die Außenschichten und die Mittelschicht sind durch ein Bindemittel, bspw. ein Epoxyharzkleber miteinander verklebt.

### AUFGABE UND LÖSUNG

Aufgabe der Erfindung ist es, ein flächiges Verbundmaterial der eingangs erwähnten Art zu schaffen, das leicht ist und mechanisch gut bearbeitbar ist.

Diese Aufgabe wird erfindungsgemäß gelöst durch ein flächiges Verbundmaterial mit mindestens einer Mittelschicht und zwei, die mindestens eine Mittelschicht bedeckenden Außenschichten, wobei die mindestens eine Mittelschicht und die Außenschichten im wesentlichen vollflächig und fest miteinander verbunden sind, die mindestens eine Mittelschicht eine Textilstruktur aufweist, komprimierbar und schwingungsund schalldämpfend wirkt und in mindestens eine Richtung dehnbar ist und das Verbundmaterial plastisch verformbar und die mindestens eine Mittelschicht und die Außenschichten durch ein Bindemittel miteinander verklebt sind. Insbesondere ist das Verbundmaterial tiefziehbar.

Die Mittelschicht des Verbundmaterials besteht vorzugsweise aus voneinander verschiedenen Phasen. Die textile Struktur der Mittelschicht bildet eine Phase, ein Füllstoff, ein Bindemittel, beispielsweise ein Kleber, und/oder Gase, können andere Phasen bilden. In der Regel sind 1 bis 5, insbesondere 1 bis 3 Mittelschichten vorhanden.

Die Mittelschicht kann aus verschiedenartigen Werkstoffen in volumengebender Konstruktion aufgebaut sein. Sie kann aus einer einzigen Lage bzw. Schicht oder aus mehreren Lagen bzw. Schichten bestehen. Im Falle mehrerer Lagen können sich die einzelnen Lagen in Konstruktion und Werkstoff unterscheiden. Besonders vorteilhaft ist es, die Mittelschicht mit einer porösen Struktur auszuführen, die durch Einschluß von gasförmigen Medien gebildet wird. Die poröse Struktur kann mindestens teilweise durch einen Füllstoff aufgefüllt sein. Durch die verschiedenen Phasen in der mindestens einen Mittelschicht, insbesondere durch die textile Struktur und die darin befindlichen Poren aus gasförmigen Medien, insbesondere Luft, und/oder den Füllstoff, wird der Schall beim Durchtritt durch den Verbund gedämpft. Die Oberfläche der Mittelschicht kann eine berg- und talähnliche Struktur aufweisen, durch die die Mittelschicht mit den Außenschichten durch eine Vielzahl einzelner Berührungspunkte, flächig über den Verbund angeordnet, verbunden ist. Gasförmige Medien, insbesondere Luft, können offen oder eingeschlossen in der Mittelschicht enthalten sein. Weiterhin kann die Mittelschicht eine Orientierung aufweisen. Wenn mehrere Mittelschichten bzw. Lagen vorgesehen sind, dann können also die einzelnen Lagen unterschiedlich ausgerichtet angeordnet werden, und zwar können die einzelnen Lagen anisotrop, d.h. alle in Vorzugsrichtung ausgerichtet werden oder es können die einzelnen Lagen quasi-isotrop, versetzt zueinander angeordnet werden.

Die Außenschichten sind vorzugsweise dicht und besitzen insbesondere eine glatte Oberfläche. Besonders bevorzugt ist es, die Mittelschicht aus einem anderen Material als die Außenschichten zu bilden. Sie kann aber auch aus demselben Werkstoff, wie die Mittelschicht ausgebildet sein. Die Textilstruktur der Mittelschicht wird vorzugsweise aus einem flächigen technischen Textilmaterial gebildet. Sie können auch als technische Materialien bezeichnet werden, die durch textile Techniken hergestellt sind. Als technische Textilien können Maschenstoffe, Gewebe, Vliesstoffe, Matten, Gelege, beispielsweise genadelte Gelege, insbesondere Maschenstoffe, eingesetzt werden. Als Maschenstoffe werden vorzugsweise Gewirke oder Gestricke verwendet, die in einer, vorzugsweise in beiden Richtungen dehnbar sind.

Als Mittelschicht können auch Abstandstextilien, wie Abstandgewebe, -gewirke oder -gestricke eingesetzt werden, die ebenfalls zu den technischen Textilien zu zählen sind. Dabei sind einzelne vorzugsweise gewebte, gestrickte oder gewirkte Textilschichten durch Abstandhalter miteinander verbunden. Die Textilschichten können aus mehreren Einzellagen bestehen. Als Abstandhalter können Abstandsflächen eingearbeitet, beispielsweise eingewebt werden, die unter einem bestimmten Winkel, beispielsweise 45°, von einer Schicht zur anderen verlaufen. Es können auch Pins als Abstandshalter eingesetzt werden, die unter einem bestimmten Winkel zwischen die Schichten eingeschossen werden. Bevorzugt werden jedoch Stehfäden verwendet, mit denen die verschiedenen Schichten miteinander verbunden sind und die partiell in die einzelnen Schichtlagen eingebunden sind. Beispielsweise kann ein gewebtes Abstandstextil aus zwei gewebten Decklagen mit einem zwischen den Decklagen befindlichen Kettfadensystem aufgebaut sein. Bei Maschenabstandstextilien, also gewirkten oder gestrickten Abstandstextilien, können beispielsweise zwei separate Maschenwarenflächen durch mehr oder weniger steife Abstandsfäden miteinander verbunden sein. Bei der Verwendung von Abstandstextilien werden besonders biegesteife und gleichzeitig aufgrund ihres hohen Hohlraumvolumenanteils leichte Verbundwerkstoffe geschaffen. Je weiter die einzelnen Schichten voneinander entfernt sind, desto biegesteifer wird das Bauteil. Die Abstandshalter, insbesondere die Stehfäden können so in den angrenzenden Oberflächenschichten der Schichten verankert werden, daß ein kompakter Zusammenhalt der dreidimensionalen Textilie besteht und der Verbund in Belastungsrichtung, also in Richtung der Kraftlinien verstärkt wird. Damit lassen sich Abstandstextilien konstruieren, die vollständig gestreckte Stehfäden aufweisen und sich damit in Stehfaden-Richtung wie ein unidirektionales Textil verhalten.

Die technischen Textilien, insbesondere die Maschenstoffe, bestehen vorzugsweise aus Fasern, Garnen bzw. Fäden oder Drähten bis ca. 1 mm Durchmesser. Die Garne bzw. Fäden können monofil und/oder multifil sein. Die Fasern, Garne oder Drähte können gekreuzt oder parallel, vorzugsweise gekreuzt, angeordnet sein. Die Drähte können vorzugsweise untereinander verlötet oder verschweißt sein und beispielsweise eine Art Sieb bilden. Das Textilmaterial kann aus Metallfasern, Naturfasern, synthetischen Fasern, Kohlefasern und/oder Mineralfasern bzw. -drähten gebildet sein. Metallische Fasern, Garne bzw. Drähte sind bevorzugt. Besonders bevorzugt ist eine Mittelschicht aus gemischtem Fasermaterial, wobei insbesondere Metallfasern oder -garne mit nichtmetallischen Fasern oder Garnen kombiniert sind. Es können auch Metall-Abstandstextilien verwendet werden. Die Metallfasern, insbesondere monofile oder multifile Stahl-, Aluminium- oder Bronzegarne können als Hauptgarne, die nichtmetallischen Fasern bzw. Garne, insbesondere Kunststoffasern, z.B. aus Polyester, können als Träger- oder Begleitgarn in der Mittelschicht eingesetzt werden. Durch die nichtmetallischen vorzugsweise multifilen Begleitgarne erhöht sich die Verarbeitungsfähigkeit der Metallfasern bzw. -garne beispielsweise zu einem Gewirk oder einem Gestrick.

Die mindestens eine Mittelschicht ist mit den beiden Außenschichten durch ein Bindemittel miteinander verbunden. Als Bindemittel ist ein textiler Haftverschluß zwischen Mittelschicht und den Außenschichten möglich. Das Bindemittel dient zur stoffschlüssigen Verbindung von Mittelschicht und Außenschicht, wobei vorzugsweise eine adhäsive Verbindung mit Hilfe eines Klebers oder eines hotmelts hergestellt wird. Weiterhin können einzelne Lagen bzw. Mittelschichten durch Bindemittel untereinander verbunden werden, wobei für beide Aufgaben verschiedenartige Bindemittel verwendet werden können. Als Bindemittel kann dabei ein Kleber mit einer oder mehreren Klebekomponenten verwendet werden. Als Kleber werden bevorzugt Zwei-Komponenten-Kleber aus Kunstharz, insbesondere aus Epoxyharz, eingesetzt. Weiterhin ist es denkbar, Schmelzkleber in Form von Hot-Melt-Folien einzusetzen. Der Epoxyharzkleber wird beispielsweise als Propfen mikroskopischer Abmessungen in Poren oder Unebenheiten der volumengebenden Konstruktion der Mittelschicht eingelagert, oder dient als filmartige Auflage auf die Fasern oder Fäden der Mittelschicht. Besonders bevorzugt ist ein Schmelzkleber, der unter Wärmeeinwirkung unter Verbindung der Schichten als Kleber dient, insbesondere ein schmelzbarer Polymerfaden, der ein Begleitfaden des Maschenstoffes ist. Bei lötfähigen Materialien kann das Bindemittel auch von einem Lot gebildet werden. Der Bindemittel-Gehalt beträgt je nach Ausführung 10 bis 80 Volumenprozent des Volumens der Mittelschicht. Wird der Begleitfaden, beispielsweise das schmelzbare Polymergarn, als Bindemittel eingesetzt, beträgt der Bindemittel-Gehalt vorzugsweise höchstens 10 %. Das Bindemittel befindet sich bevorzugt an den Grenzschichten zwischen der Mittelschicht und den Außenschichten.

Die Außenschichten können aus einem anfänglich elastischen, ab einer bestimmten Dehnung plastisch verformbarem, vorzugsweise einem eine geschlossene Oberfläche aufweisenden, Material bestehen, beispielsweise aus metallischen oder nichtmetallischen Blechen, Folien, Platten, oder auch technischen Textilmaterialien. Besonders bevorzugt sind Außenschichten aus Metall, beispielsweise Stahl- oder Aluminiumbleche bzw. Folien. Auch Bleche oder Folien aus anderen Materialien sind als Außenschicht denkbar.

Besonders bevorzugt ist es, die Außenschichten und die Mittelschicht gegenseitig elektrisch leitfähig auszubilden, beispielsweise durch Außenschichten aus Metall und einer Mittelschicht mit die Außenschichten elektrisch verbindenden Metallfasern und/oder Füllstoffen, beispielsweise Metall-Abstandstextilien. Dadurch ist es möglich, den Verbund punktzuschweißen und ihn z.B. für die Automobilproduktion einzusetzen.

Durch die volumengebende Konstruktion der Mittelschicht bietet das Verbundmaterial charakteristische anwendungstypische Eigenschaften. Die Mittelschicht ist insbesondere in mindestens eine Richtung in der Substratebene dehnbar. Dabei ist die Reißdehnung der Mittelschicht größer/gleich 10 %, vorzugsweise mindestens 25 %, insbesondere mindestens 50 %. Weiterhin kann die Mittelschicht, insbesondere aufgrund von mit gasförmigen Medien gefüllten offenen oder geschlossenen Poren oder Hohlräumen, senkrecht zur Substratebene komprimiert werden. Durch eine Kompression, die schon beim Verkleben der Mittelschicht mit den Außenschichten aufgebracht wird und beim anschließenden thermischen Verpressen geht der Porenanteil von anfänglich vorzugsweise 90 bis 30 Volumenprozent auf 40 bis 10 Volumenprozent der Mittelschicht zurück.

Der Preßdruck beim thermischen Verpressen beträgt vorzugsweise 4 bar bis 15 bar, insbesondere ca. 10 bar.
Der Restporen-Anteil kann besonders vorteilhaft über die Menge des vorher beim Verkleben zugegebenen Bindemittels eingestellt werden. Die Preßbedingungen können anhand eines Kugelfalltests so eingestellt werden, daß beispielsweise eine Stahlkugel vom fertigen Verbundmaterial aus einer Fallhöhe von 1 m nur einmal hochspringt und dabei eine maximale Rücksprunghöhe, beispielsweise 10 mm, nicht überschritten wird. Das Gas- bzw. Porenvolumen in der mindestens einen Mittelschicht kann auch durch Füllen der Poren der Mittelschicht mit einem Füllstoff, der keine Klebeeigenschaften besitzt, eingestellt werden. Durch Einstellen des relativen Gasvolumens in der Mittelschicht können die schalldämpfende Eigenschaften des Verbundmaterials gesteuert werden.
Die Kompressibilität der Mittelschicht kann durch ein Druckprüfverfahren mit Hilfe eines Druckstempels (DIN EN ISO 5084) bestimmt werden. Dabei wird die Mittelschicht in einem ersten Prüfungsschritt vorzugsweise bei einem Druck von 20 mbar komprimiert und die Dickenänderung gegenüber der Ausgangsdicke der Mittelschicht gemessen. In einem zweiten Prüfungsschritt wird der Prüfdruck dann auf vorzugsweise 200 mbar erhöht und ebenfalls die Dickenänderung bestimmt.
Bei einer Steigerung des Prüfdruckes von 20 auf 200 mbar ergibt sich eine Dickenreduzierung von ca. 5 % bis 25 %.
Das Verbundmaterial kann durch die vorgenannnten Ausbildungen und Eigenschaften sehr stark plastisch verformt, insbesondere tiefgezogen werden. Dadurch können Bauteile mit sehr kleinem Krümmungsradius, beispielsweise Autotürgriffschalen hergestellt werden.

Ein Verbundmaterial dieser Eigenschaften weist vorzugsweise eine Materialstärke von 0,1 mm bis 3,0 mm, insbesondere von 0,5 mm bis 1,5 mm auf. Die Außenschichten besitzen dabei zusammen vorzugsweise eine geringere Materialstärke als die Mittelschicht. Sie weisen eine Dicke von 0,05 mm bis 1,5 mm, vorzugsweise kleiner als 1 mm, auf. Das Massenverhältnis der Außenschichten zur Mittelschicht kann dabei jedoch von 80 % zu 20 % bis hin zu 95 % zu 5 % betragen, wobei die Bindemittelmasse und ggf. der Füllstoff in der Mittelschichtmasse enthalten ist. Durch den Einsatz des Verbundes lassen sich 40 % bis 80 % des Gewichtes eines Vollmaterials gleicher Steifigkeit einsparen.

### FIGURENBESCHREIBUNG

Ein Ausführungsbeispiel der Erfindung ist in den Zeichnungen dargestellt und wird im folgenden näher erläutert. In den Zeichnungen zeigen:
- Fig. 1: einen Längsschnitt durch die einzelnen Schichten der Verbundplatte,
- Fig. 2: einen Längsschnitt mit 90° versetzter Schnittführung durch die Mittelschicht von Fig. 1 in Richtung des Pfeiles II gesehen.

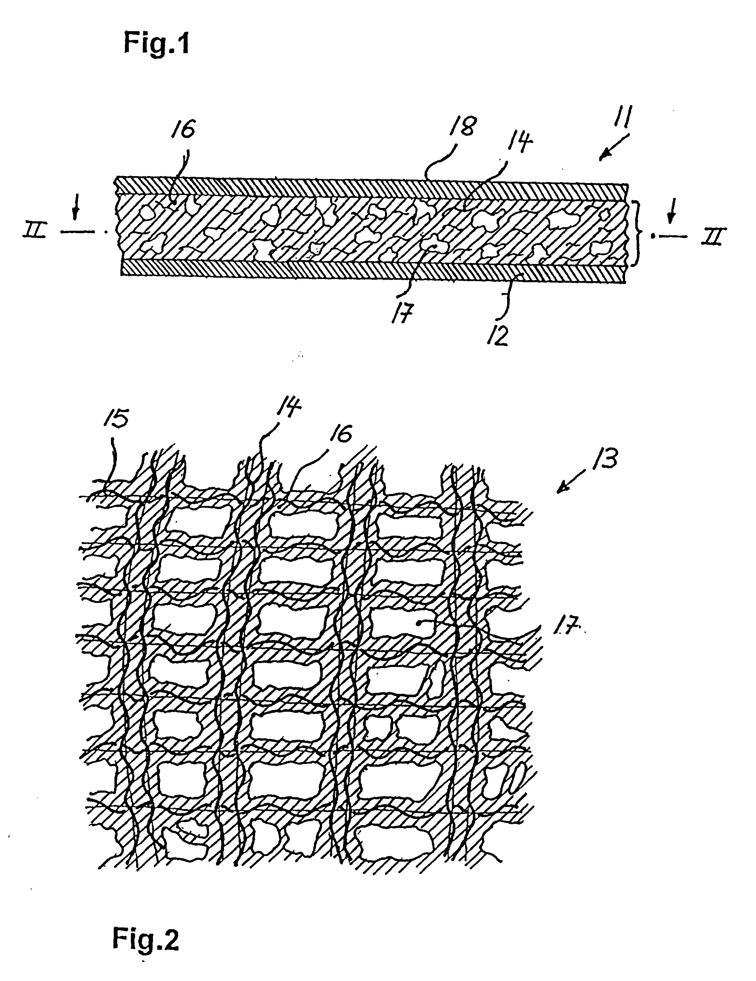

Fig. 1 zeigt eine Verbundplatte 11 mit zwei planen Außenschichten 12 und einer planen, eine Textilstruktur aufweisenden Mittelschicht 13. Die beiden Außenschichten 12 bedecken die Strukturoberflächen der Mittelschicht 13. Sie bestehen jeweils aus einlagigem Edelstahlvollblech mit einer Stärke von 200 µm und einer Flächenmasse von 1.500 g/m². Die Oberflächenbeschaffenheit der Außenschichten 12 ist glatt und glänzend. Die Mittelschicht 13 grenzt unmittelbar und vollflächig an die Innenseiten der Außenschichten 12 an.

Die Mittelschicht 13, eine volumengebende Konstruktion mit Textilstruktur, mit einer Materialstärke von 0,6 mm, weist einlagiges Stahlgestrick aus Stahlgarn 14 mit einem Trägergarn 15 aus Polyester auf, der die Verarbeitungsfähigkeit des Stahlfilamentes verbessert. Der Gewichtsanteil des Polyesters am Gesamtgewicht des Gestrickes beträgt 30 %. Die Gestrick-Flächenmasse beträgt 110 g/m².

Die Verbindung der Mittelschicht 12 mit den Außenschichten 13 erfolgt durch Epoxyharz 16. Die Mittelschicht 12 wird dabei mit dem Epoxyharz 16 gerakelt, d.h. tiefengetränkt. Dabei bilden sich Pfropfen von Epoxyharz in den offenen Poren 17 der volumengebenden Konstruktion der Mittelschicht 12. Darüber hinaus wird das Stahlfilament 14 bzw. des Polyesterbegleitgarns 15 mit einem Film aus Epoxyharz belegt. Die Auflagemenge beträgt dabei insgesamt 200 g/m². Das Verhältnis Textilmasse zu Klebermasse beträgt ca. 1:2. Auch ein Verhältnis von 1:1 ist denkbar. Das Zusammenfügen von Außenschichten 13 und Mittelschicht 12 erfolgt unter 10 bar Flächendruck bei 190 °C in drei Minuten. Das Porenvolumen, mit einem Anteil von 30 % bis 50 %, am Gesamtvolumen des Substrates wird dabei deutlich reduziert.

Zur Verdeutlichung der Garnlegung zeigt die Fig. 2 einen Schnitt durch das Gestrick der Mittelschicht 13. Das Stahlgestrick besteht aus einem monofilen Stahlfilament 14, dem ein monofiles Polyester-Trägergarn 15 in der Weise zugeordnet ist, daß sich das Stahlgarn 14 helixförmig um das Trägergarn 15 windet. Die Stäbchen des Gestrickes sind in Längsrichtung, das Kettgarn ist in Querrichtung der Verbundplatte 11 angeordnet. Das Kettgarn ist 18 mal pro Zentimeter geschlungen und bildet dabei pro Zentimeter acht Stäbchen. Das Gestrick ist sowohl in Quer- als auch in Längsrichtung dehnbar.

Das Epoxyharz 16 sammelt sich durch seine benetzende Wirkung an den einzelnen Garnen bzw. an dem Filament an und füllt die Zwischenräume zwischen diesen teilweise aus. Offen- oder geschlossenzellige Poren 17 bilden sich dabei inselförmig in den Garnzwischenräumen. Grundsätzlich besitzt die Verbundplatte 11 durch die gestrickte Mittelschicht 13 eine hohe Steifigkeit. Dennoch zeichnet sie sich infolge der hohen lokalen Dehnbarkeit und der Komprimierfähigkeit des Gestrikkes, durch eine hohe plastische Verformbarkeit bei kleinem Krümmungsradius aus, d.h. sie ist tiefziehfähig.

Durch den Textilanteil, die offen- oder geschlossenzelligen Poren der Mittelschicht 13 und die Epoxyharzverklebung kann die Verbundplatte 11 als schall- und schwingungsdämpfendes Bauteil eingesetzt werden. Für die Beurteilung der Dämpfungseigenschaften wurde ein Kugelfalltest durchgeführt. Dabei fällt eine Stahlkugel mit einer Masse von 8 g aus einem Meter Höhe auf eine horizontal auf dem Boden positionierte Verbundplatte. Die Kugel sprang einmal 1 mm zurück. Bei einer Stahlplatte gleicher Dicke springt die Kugel unter sonst gleichen Bedingungen mehrfach zurück und erreicht beim ersten Rücksprung eine Höhe von ca. 300 mm.

Schließlich ist die Verbundplatte 11 durch den elektrisch leitenden Stahlanteil in der Außenschicht 12 und der Mittelschicht 13 punktschweißbar.

Bei einem weiteren Ausführungsbeispiel, in den Figuren nicht dargestellt, ist die Mittelschicht 13 aus drei Gestricklagen bzw. -schichten gebildet. Dabei liegen die Stäbchen der einzelnen Gestricklagen jeweils quer aufeinander. Neben einer Erhöhung der Steifigkeit der Verbundplatte 11 hat dies zur Folge, daß die Dehnbarkeit der Mittelschicht 13 in Längsund in Querrichtung der Verbundplatte ungefähr gleich groß ist.

Anstelle des Epoxyharzklebers 16 kann zur Verbindung der Mittelschicht 13 mit den Außenschichten 12 ein thermoplastisches Kunststoffbegleitgarn 15 als Schmelzkleber eingesetzt werden. Der Begleitfaden schmilzt bei 180°C.

Der Luftanteil in der Mittelschicht 13, maßgeblicher Faktor für die Komprimierfähigkeit und die schalldämpfende Wirkung der Verbundplatte 11, ist beim Einsatz dieser Verbindungsart im Vergleich zum Epoxyharzkleben höher, da der Schmelzkleberfaden 15 die Poren 17 in der Mittelschicht 13 im wesentlichen nicht verschließt.

Bei einem weiteren Ausführungsbeispiel, das in den Figuren nicht dargestellt ist, ist die Mittelschicht 13 aus einem Abstandsgestrick gebildet. Das Abstandsgestrick besteht aus einer oberen und einer unteren Deckschicht. Die Deckschicht kann aus mehreren Gestricklagen aufgebaut sein. Zwischen den Deckschichten befinden sich Stehfäden, die die beiden Deckschichten auf Abstand halten. Die Stehfäden sind in die Oberflächengestricklagen der beiden Deckschichten eingestrickt. Zur Verbindung des Abstandsgestrickes mit den Außenschichten 12 wird ein Epoxyharzkleber verwendet, der auf die den Stehfäden abgewandten Oberflächen der Deckschicht aufgebracht wird.

## Patentansprüche

1. Flächiges, steifes Verbundmaterial mit mindestens einer Mittelschicht (13) und zwei, die mindestens eine Mittelschicht (13) bedeckenden Außenschichten (12), wobei die mindestens eine Mittelschicht (13) und die Außenschichten (12) im wesentlichen vollflächig und fest miteinander verbunden sind, die mindestens eine Mittelschicht (13) eine Textilstruktur aufweist, komprimierbar ist und schwingungs- und schalldämpfend wirkt, **dadurch gekennzeichnet, daß** die mindestens eine Mittelschicht in mindestens eine Richtung dehnbar ist, der Verbund plastisch verformbar ist und die mindestens eine Mittelschicht (13) und die Außenschichten (13) durch ein Bindemittel miteinander verklebt sind.

2. Verbundmaterial nach Anspruch 1, **dadurch gekennzeichnet, daß** die mindestens eine Mittelschicht (13), vorzugsweise mehrere Mittelschichten (13), eine poröse Struktur aufweisen.

3. Verbundmaterial nach Anspruch 1 oder 2, **dadurch gekennzeichnet, daß** die mindestens eine Mittelschicht (13) aus einem anderen Material als die Außenschichten (12) besteht.

4. Verbundmaterial nach einem der vorhergehenden Ansprüche, **dadurch gekennzeichnet, daß** die mindestens eine Mittelschicht (13) ein Vliesstoff, ein Gewebe, ein Mattenstoff oder eine Maschenware, vorzugsweise eine Maschenware, die insbesondere mindestens teilweise aus Metall besteht, aufweist.

5. Verbundmaterial nach einem der vorhergehenden Ansprüche, **dadurch gekennzeichnet, daß** die mindestens eine Mittelschicht (13) ein Gewirk oder ein Gestrick, insbesondere aus Metall, aufweist.

6. Verbundmaterial nach einem der vorhergehenden Ansprüche, **dadurch gekennzeichnet, daß** die mindestens eine Mittelschicht ein Abstandstextil, insbesondere ein Abstandsgewebe, -gewirk oder -gestrick ist, wobei insbesondere mindestens zwei Textilschichten, vorzugsweise zwei Deckschichten durch Abstandshalter, insbesondere Stehfäden, voneinander beabstandet sind.

7. Verbundmaterial nach einem der vorhergehenden Ansprüche, **dadurch gekennzeichnet, daß** die mindestens eine Mittelschicht (13) eine Textilstruktur aus gemischtem Faser- oder Garnmaterial, vorzugsweise in Form einer Maschenware, aufweist, wobei insbesondere Metallfasern (14) oder -garne mit nichtmetallischen Fasern oder Garnen kombiniert sind.

8. Verbundmaterial nach einem der vorhergehenden Ansprüche, **dadurch gekennzeichnet, daß** die mindestens eine Mittelschicht (13) und die Außenschichten (12) durch einen Kleber (16) verbunden sind.

9. Verbundmaterial nach einem der vorhergehenden Ansprüche, **dadurch gekennzeichnet, daß** einzelne Mittelschichten (13) durch ein Bindemittel miteinander verklebt sind.

10. Verbundmaterial nach Anspruch 7 oder 8, **dadurch gekennzeichnet, daß** das Bindemittel mindestens eine Klebekomponente aufweist, insbesondere ein Zweikomponentenkleber ist.

11. Verbundmaterial nach einem der Ansprüche 7 bis 9, **dadurch gekennzeichnet, daß** das Bindemittel ein Schmelzkleber, insbesondere eine Hot-Melt-Folie ist.

12. Verbundmaterial nach einem der Ansprüche 7 bis 10, **dadurch gekennzeichnet, daß** das Bindemittel ein schmelzbares Polymergarn ist, wobei das Polymergarn ein Begleit- oder Trägergarn (15) der Maschenware ist und unter Wärmeinwirkung unter Verbindung der Schichten als Bindemittel dient.

13. Verbundmaterial nach einem der vorhergehenden Ansprüche, **dadurch gekennzeichnet, daß** es einen Gehalt an Bindemittel und ggf. zusätzlichen Füllstoff von 5 bis 85 Volumenprozent, vorzugsweise 10 bis 80 Volumenprozent des Volumens der Mittelschicht einnimmt, aufweist.

14. Verbundmaterial nach einem der vorhergehenden Ansprüche, **dadurch gekennzeichnet, daß** es in der mindestens einen Mittelschicht ein Gasvolumen, insbesondere in Form von Poren, in der Größe von 10 bis 40 Volumenprozent der Mittelschicht aufweist.

15. Verbundmaterial nach einem der vorhergehenden Ansprüche, **dadurch gekennzeichnet, daß** die Außenschichten (12) aus plastisch verformbarem Material, insbesondere einer Folie, gebildet werden.

16. Verbundmaterial nach einem der vorhergehenden Ansprüche, **dadurch gekennzeichnet, daß** mindestens eine Außenschicht, insbesondere beide Außenschichten (12), aus Metall bestehen.

17. Verbundmaterial nach einem der vorhergehenden Ansprüche, **dadurch gekennzeichnet, daß** die Außenschichten (12) und die mindestens eine Mittelschicht (13) elektrisch leitfähig ausgebildet sind, insbesondere das Verbundmaterial punktschweißbar ist.

18. Verbundmaterial nach einem der vorhergehenden Ansprüche, **dadurch gekennzeichnet, daß** die Außenschichten (12) aus Metallblech, insbesondere Stahlblech sind, wobei das Metallblech eine geschlossene Oberfläche (18) aufweist und insbesondere eine Außenseite mindestens einer Außenschicht (12) eine glatte Oberfläche (18) aufweist.

19. Verbundmaterial nach einem der vorhergehenden Ansprüche, **dadurch gekennzeichnet, daß** es, insbesondere durch eine Dehnfähigkeit und Komprimierfähigkeit der Mittelschicht (13), tiefziehbar ist.

20. Verbundmaterial nach einem der vorhergehenden Ansprüche, **dadurch gekennzeichnet, daß** es eine Materialstärke von 0,1 mm bis 3,0 mm, insbesondere von 0,5 mm bis 1,5 mm aufweist.

21. Verbundmaterial nach einem der vorhergehenden Ansprüche, **dadurch gekennzeichnet, daß** beide Außenschichten (12) zusammen eine geringere Materialstärke aufweisen, als die mindestens eine Mittelschicht (13).

22. Verbundmaterial nach einem der vorhergehenden Ansprüche, **dadurch gekennzeichnet, daß** es ein Gewicht von 20 % bis 60 %, insbesondere von 35 % bis 45 %, des Gewichtes eines Vollmaterials gleicher Steifigkeit aufweist.

23. Verwendung des Verbundmaterials nach einem der vorhergehenden Ansprüche in der Kraftfahrzeugtechnik, insbesondere als Karosseriematerial.

## Claims

1. Flat, rigid composite material with at least one medial layer (13) and two outer layers (12) covering the at least one medial layer (13), wherein the at least one medial layer (13) and the outer layers (12) are tightly bonded together essentially across the entire surface, the at least one medial layer (13) exhibits a textile structure, is compressible and has a vibration and noise-absorbing effect, **characterized in that** the at least one medial layer is expandable in at least one direction, the bond is plastically deformable and the at least one medial layer (13) and the outer layers (13) are joined together by a binder.

2. Composite material in accordance with Claim 1, **characterized in that** the at least one medial layer (13), preferably several medial layers (13), exhibit a porous structure.

3. Composite material in accordance with Claim 1 or 2, **characterized in that** the at least one medial layer (13) consists of material that is different to the material of the outer layers (12).

4. Composite material in accordance with one of the aforementioned claims, **characterized in that** the at least one medial layer (13) includes a non woven, a woven fabric, a mat material, or a knitted fabric, preferably a knitted fabric, which specifically consists at least partially of metal.

5. Composite material in accordance with one of the aforementioned claims, **characterized in that** the at least one medial layer (13) includes a warp knitting or a knitting, specifically made of metal.

6. Composite material in accordance with one of the aforementioned claims, **characterized in that** the at least one medial layer is a spaced textile, specifically a spaced woven fabric, warp knitting or knitting, wherein specifically at least two textile layers, preferably two top layers are spaced from each other through the use of spacers, specifically vertical threads.

7. Composite material in accordance with one of the aforementioned claims, **characterized in that** the at least one medial layer (13) includes a textile structure of mixed fiber or thread material, preferably in the form of a knitted fabric, wherein specifically metal fibers (14) or threads are combined with non-metallic fibers or threads.

8. Composite material in accordance with one of the aforementioned claims, **characterized in that** the at least one medial layer (13) and the outer layers (12) are joined by an adhesive (16).

9. Composite material in accordance with one of the aforementioned claims, **characterized in that** individual medial layers (13) are joined by a binder.

10. Composite material in accordance with Claim 7 or 8, **characterized in that** the binder includes at least one bonding component and is preferably a two-component adhesive.

11. Composite material in accordance with Claims 7 to 9, **characterized in that** the binder is a melting adhesive, specifically a hot melt film.

12. Composite material in accordance with one of the Claims 7 to 10, **characterized in that** the binder is a melting polymer thread, wherein the polymer thread is a carrier or support thread (15) of the knitted fabric and under the influence of heat, serves as a binder to bond the layers.

13. Composite material in accordance with one of the aforementioned claims, **characterized in that** it includes a content of binder and where necessary additional filler of 5% to 85%, preferably occupying 10% to 80% of the volume of the medial layer.

14. Composite material in accordance with one of the aforementioned claims, **characterized in that** its at least one medial layer includes a gas volume, specifically in the form of pores, in the order of 10% to 40% of the volume of the medial layer.

15. Composite material in accordance with one of the aforementioned claims, **characterized in that** the outer layers (12) are formed from plastically deformable materials, specifically a film.

16. Composite material in accordance with one of the aforementioned claims, **characterized in that** at least one outer layer, specifically both outer layers (12) consist of metal.

17. Composite material in accordance with one of the aforementioned claims, **characterized in that** the outer layers (12) and the at least one medial layer (13) are formed to be electrically conductive and **in that** the composite material can be spot welded.

18. Composite material in accordance with one of the aforementioned claims, **characterized in that** the outer layers (12) consist of sheet metal, preferably steel plate, wherein the sheet metal exhibits a closed surface (18) and specifically an exterior of at least one outer layer (12) has a smooth surface (18).

19. Composite material in accordance with one of the aforementioned claims, **characterized in that** due to the expandability and compressibility of the medial layer, it is capable of being deep-drawn.

20. Composite material in accordance with one of the aforementioned claims, **characterized in that** it exhibits a material thickness of 0.1 mm to 3.0 mm, specifically 0.5 mm to 1.5 mm.

21. Composite material in accordance with one of the aforementioned claims, **characterized in that** both outer layers (12) jointly exhibit a narrower material thickness than the at least one medial layer (13).

22. Composite material in accordance with one of the aforementioned claims, **characterized in that** it exhibits a weight of 20% to 60%, specifically 35% to 45%, of the weight of a solid material of equivalent rigidity.

23. Use of the composite material in accordance with one of the aforementioned claims in vehicle systems, specifically as a body shell material.

## Revendications

1. Matériau composite plat et rigide comportant au moins une couche intermédiaire (13) et deux couches extérieures (12) recouvrant au moins l'une des couches intermédiaires (13), dans lequel l'une au moins des couches intermédiaires (13) et les couches extérieures (12) sont essentiellement associées mutuellement sur toute la surface et de manière consistante, l'une au moins des couches intermédiaires (13) présentent une structure textile, est compressible et amortit les vibrations et le bruit, **caractérisé en ce que** l'une au moins des couches intermédiaires est extensible au moins dans une direction, le composite est déformable plastiquement et l'une au moins des couches intermédiaires (13) et les couches extérieures (13) sont réunies mutuellement par un liant.

2. Matériau composite selon la revendication 1, **caractérisé en ce que** l'une au moins des couches intermédiaires (13), préférentiellement plusieurs couches intermédiaires (13), présente(nt) une structure poreuse.

3. Matériau composite selon la revendication 1 ou 2, **caractérisé en ce que** l'une au moins des couches intermédiaires (13) est constituée d'un autre matériau que les couches extérieures (12).

4. Matériau composite selon l'une des revendications qui précèdent, **caractérisé en ce que** l'une au moins des couches intermédiaires (13) présente un voile, un tissu, une matière nattée ou un tissu maillé, préférentiellement, un tissu maillé qui, en particulier, est constitué au moins partiellement de métal.

5. Matériau composite selon l'une des revendications qui précèdent, **caractérisé en ce que** l'une au moins des couches intermédiaires (13) présente un maillage ou un tricotage, en particulier en métal.

6. Matériau composite selon l'une des revendications qui précèdent, **caractérisé en ce que** l'une au moins des couches intermédiaires est un textile d'espacement, en particulier, un tissu, un maillage ou un tricotage d'espacement, dans lequel, en particulier, deux couches textiles, préférentiellement deux couches de couverture sont maintenues à distance l'une de l'autre par des écarteurs, en particulier des fils droits.

7. Matériau composite selon l'une des revendications qui précèdent, **caractérisé en ce que** au moins une couche intermédiaire (13) présente une structure textile constituée de fibres ou de fils mélangés, préférentiellement sous la forme d'un tissu maillé, dans lequel, en particulier, des fibres (14) ou des fils métalliques sont combinés avec des fibres ou des fils non métalliques.

8. Matériau composite selon l'une des revendications qui précèdent, **caractérisé en ce que** au moins l'une des couches intermédiaires (13) et les couches extérieures (12) sont réunies par une colle (16).

9. Matériau composite selon l'une des revendications qui précèdent, **caractérisé en ce que** plusieurs couches intermédiaires (13) sont réunies mutuellement par un liant.

10. Matériau composite selon la revendication 7 ou 8, **caractérisé en ce que** le liant présente au moins un composant de collage, en particulier est une colle à deux composants.

11. Matériau composite selon l'une des revendications 7 à 9, **caractérisé en ce que** le liant est une colle fusible, en particulier une feuille mince Hot-Melt.

12. Matériau composite selon l'une des revendications 7 à 10, **caractérisé en ce que** le liant est un fil polymère fusible, le fil polymère étant un fil accompagnateur ou support (15) du tissu maillé et servant de liant par association des couches sous l'effet de la chaleur.

13. Matériau composite selon l'une des revendications qui précèdent, **caractérisé en ce qu'**il présente une teneur en liant et, le cas échéant, en matière de remplissage supplémentaire de 5 à 85% en volume, préférentiellement de 10 à 80% en volume du volume de la couche intermédiaire.

14. Matériau composite selon l'une des revendications qui précèdent, **caractérisé en ce qu'**il présente au moins dans l'une des couches intermédiaires un volume de gaz, en particulier sous la forme de pores, d'une dimension de 10 à 40% en volume de la couche intermédiaire.

15. Matériau composite selon l'une des revendications qui précèdent, **caractérisé en ce que** les couches extérieures (12) sont constituées d'un matériau plastiquement déformable, en particulier une feuille mince.

16. Matériau composite selon l'une des revendications qui précèdent, **caractérisé en ce que** au moins une couche extérieure, en particulier les deux couches extérieures (12), est(sont) constituée(s) de métal.

17. Matériau composite selon l'une des revendications qui précèdent, **caractérisé en ce que** les couches extérieures (12) et l'une au moins des couches intermédiaires (13) sont constituées de manière à être conductrices d'électricité, en particulier le matériau composite est soudable par points.

18. Matériau composite selon l'une des revendications qui précèdent, **caractérisé en ce que** les couches extérieures (12) sont constituées d'une tôle métallique, en particulier une tôle d'acier, la tôle métallique présentant une surface fermée (18), une face extérieure d'au moins une couche extérieure (12) présentant en particulier une surface lisse (18).

19. Matériau composite selon l'une des revendications qui précèdent, **caractérisé en ce qu'**il peut faire l'objet d'un emboutissage profond en particulier grâce à la capacité de dilatation et de compression de la couche intermédiaire (13).

20. Matériau composite selon l'une des revendications qui précèdent, **caractérisé en ce qu'**il présente une épaisseur de matériau de 0,1 mm à 3,0 mm, en particulier de 0,5 mm à 1,5 mm.

21. Matériau composite selon l'une des revendications qui précèdent, **caractérisé en ce que** les deux couches extérieures (12) présentent ensemble une épaisseur de matériau inférieure à au moins une couche intermédiaire (13).

22. Matériau composite selon l'une des revendications qui précèdent, **caractérisé en ce qu'**il présente un poids de 20% à 60%, en particulier de 35% à 45%, du poids d'un matériau massif de même rigidité.

23. Utilisation du matériau composite selon l'une des revendications qui précèdent en technique automobile, en particulier, comme matériau pour carrosseries.
